# EUROPEAN PATENT SPECIFICATION

(11) **EP 2 271 203 B1**
(45) Date of publication and mention of the grant of the patent: **02.11.2011**
(21) Application number: 09734246.3
(22) Date of filing: 21.04.2009
(51) Int. Cl.: A01K 13/00

(54) **DEVICE FOR AND METHOD OF BRUSHING LIVESTOCK**
VORRICHTUNG UND VERFAHREN ZUM BÜRSTEN VON NUTZTIEREN
DISPOSITIF ET PROCÉDÉ DE BROSSAGE DU BÉTAIL

(30) Priority: 25.04.2008 NL 1035351
(43) Date of publication of application: 12.01.2011
(73) Proprietor: Lely Patent N.V., 3147 PA Maassluis (NL)
(72) Inventor: HULS, Michel Hubert Johan, 2624 BH Delft (NL)
(74) Representative: Jennen, Peter Leonardus Hendricus
(86) International application number: PCT/NL2009/000099
(87) International publication number: WO 2009/131439

(56) References cited:
- EP-A- 1 665 927
- EP-A- 1 738 640

## Description

### BACKGROUND OF THE INVENTION

The invention relates to a device for and method of brushing livestock, in particular hoofed animals, such as cattle, in particular the sides and/or the back thereof.

Devices for brushing hoofed animals, in particular cattle, are known in various constructions.

One type, see for example EP patent application 1 665 927, comprises an elongate brush which in the rest position hangs vertically and is connected by means of a flexible connection or a universal coupling to a mounting part with which the device is fastened to a fixed body, such as a ceiling or wall. When an animal pushes against the brush, the drive of the brush is activated and the brush will brush the animal's skin as the animal advances, with tilting about one or more horizontal axes.

In another type, as described in EP patent 1 738 640, an elongate brush extends horizontally from an arm which can itself swivel back and forth about a turn axis which is parallel to the axis of rotation of the brush. At the location of the turn axis, the arm is fastened to a mounting part. In the rest position, the arm extends vertically, with the brush at the bottom of the arm. The direction of rotation of the brush can be reversed on the basis of time.

In still another type, see for example German patent 10 2004 030 234, an elongate brush extends obliquely upwards from a mounting part. The brush can swivel upwards about a horizontal axis under pressure exerted by an animal. The brush can be driven in two opposite directions. When an animal's tail becomes caught on the brush, a sensor observes that the current intensity has exceeded an input value, after which the direction of rotation is reversed in order to release the tail.

The intimate contact of the brush with an animal's skin causes wear to the - usually stiff - brush hairs; the greater the compressive forces, the more rapid the wear. The drive and any transmission means can also be subjected to high loads, possibly resulting in disturbances.

### SUMMARY OF THE INVENTION

An object of the invention is to provide a brushing device and brushing method of the sort mentioned at the outset with which the aforementioned wear can be influenced, in particular can be reduced.

An object of the invention is to provide a brushing device and brushing method of the sort mentioned at the outset with which the brushing effect can be influenced.

From one aspect, the invention provides a device for brushing the sides and/or the back of livestock, in particular hoofed animals, such as cattle, comprising a brush and a drive for the brush, wherein the drive is configured for rotation of the brush about a brush axis in two opposite directions of rotation, wherein the brush is also movable from a rest position by the exertion thereon of forces generated by an animal from the livestock, wherein the device is provided with means for observing the direction of a movement of the brush from the rest position and with means for activating the drive in one direction of rotation or the opposite direction of rotation as a function of the observed direction of movement.

By making the direction of driving of the brush dependent on the direction wherein the animal moves the brush, it is possible to give the brush at the location of the skin contact a direction of rotation which is desirable for said situation. Depending on the selected direction of rotation, the brush will then turn in the same direction or turn in the opposite direction, viewed with respect to the direction of movement; this influences the pressure exerted by the brush on the skin.

In one embodiment, the observation means are configured for observing the direction of a translation of the axis of rotation of the brush with respect to the rest position.

Additionally or alternatively, the observation means can be configured for observing the direction of a pivoting of the axis of rotation of the brush with respect to the rest position. Thus, the observation means can be configured for observing the direction of a pivoting of the axis of rotation of the brush in one or more planes which contain the axis of rotation, which can be used in an arrangement according to the above-mentioned first type. Thus, in the rest position the axis of rotation of the brush can have a horizontal direction component, preferably extending substantially vertically. The brush can in this case, as is known per se from the first type, be suspended at an upper end from a holder. The holder can in this case be configured to allow a swivelling movement of the brush in two vertical planes standing perpendicular to each other and combinations thereof.

Alternatively, the observation means can be configured for observing the direction of a pivoting of the axis of rotation of the brush in a plane perpendicular to the axis of rotation, which can be used in an arrangement according to the above-described second type. In that case, the brush can be mounted on an arm which can itself swivel in two opposite directions about a turn axis which is substantially parallel to the axis of rotation, wherein, preferably, the brush is located in the rest position below the turn axis of the arm. The brush can in this case be located in the rest position just below the turn axis of the arm. Then too, as is known from the second type, in the rest position the axis of rotation of the brush can have a horizontal direction component, in particular extending substantially horizontally.

In the case of that second type of arrangement, the drive means can be configured for activating the drive to rotate the brush in a direction of rotation which, at the location of the contact with the animal, is opposed to the observed direction of movement. The resultant of the forces on the arm will have an upward direction component and a direction component directed in the direction of movement, as a result of which the brush maintains freedom of movement and the forces on the brush and the animal can remain limited.

In a manner known per se, the brush can be elongate. Also in a manner known per se, the brush can be provided with brush hairs which, in the absence of rotation, stand substantially transversely to the axis of rotation.

From another aspect, the invention provides a method of brushing, using a brush which is driven in rotation about an axis of rotation, the sides and/or the back of livestock, in particular hoofed animals, such as cattle, wherein a direction of a movement, caused by an animal from the livestock, of the brush is observed and, on the basis of said observed direction, the brush is driven in one direction or the opposite other direction.

As was noted hereinbefore, the brush can be driven in such a way that the brush turns, at the location of the region of contact with the animal, in the opposite direction with respect to the observed direction. If a brush according to the second type is used, the brush can be able to turn via an arm in two opposite directions about a turn axis positioned at a distance from the axis of rotation, wherein during the movement, brought about by the animal, of the brush, the direction of turning about the turn axis is observed for adjusting the direction of rotation of the brush.

In these methods, the axis of rotation of the brush can be held substantially horizontally.

The aspects and features described in this description and claims of the application and/or shown in the drawings of this application may, where possible, also be applied separately from one another. Said separate aspects may form the subject matter of divisional patent applications relating thereto. This applies in particular to the features and aspects which are described per se in the sub-claims.

### BRIEF DESCRIPTION OF THE DRAWINGS

The invention will be commented on based on a number of exemplary embodiments illustrated in the appended drawings, in which:
Figures 1A-C are schematic illustrations of a first exemplary embodiment of a brushing device according to the invention;
Figures 2A and 2B show the brushing device from Figures 1A-C in a first situation of use and a relevant force diagram;
Figures 3A and 3B show the brushing device from Figures 1A-C in a second situation of use and a relevant force diagram;
Figure 4 is a schematic illustration of a second exemplary embodiment of a brushing device according to the invention;
Figure 4A is a schematic illustration, viewed from above, onto an arrangement from Figure 4 in a gangway;
Figure 5 shows the brushing device from Figure 4 in a first situation of use; and
Figure 6 shows the brushing device from Figure 4 in a second situation of use.

### DETAILED DESCRIPTION OF THE DRAWINGS

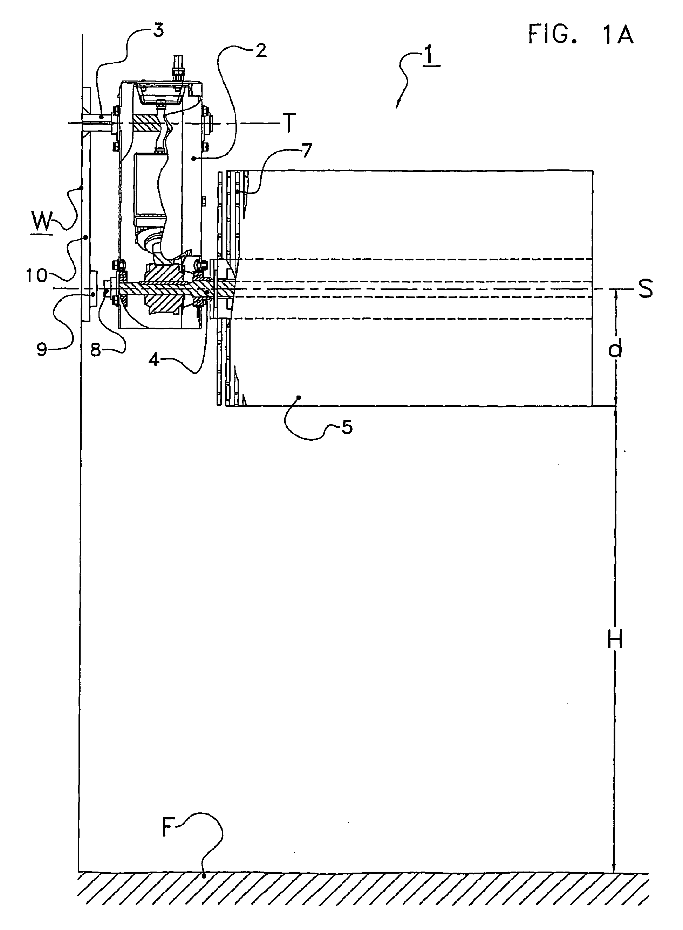

The brushing device 1 illustrated in Figures 1A-C comprises a case 2 which can turn about a horizontal shaft 3 in the mutually opposed directions C and D, about turn axis T.

The shaft 3 is fastened to a mounting plate 10 which is fastened to a wall W. Accommodated in the case 2 is a feed connection for a drive motor 12 with which a horizontally extending shaft 4 can be driven, for example via a worm transmission. The motor 12 is reversible, and can therefore drive the shaft 4 in the direction A or the direction B opposed thereto. Mounted on the shaft 4 is a straight circular cylindrical brush 5, for rotation therewith, about axis of rotation S which is parallel to turn axis T. The case 2 forms between the axes S and T a turn or swivel arm.

The brush 5 is constructed from brush hairs 7 which are directed substantially radially with respect to the axis of rotation S. The brush hairs 7 are sufficiently rigid to allow dirt to be removed from the skin of a cow and itching sensations to be relieved; generally, a healthy effect is obtained on the skin. The rotational speed can for example be 20 rpm, at a diameter d of for example 50 cm. The height H of the axis of rotation will be adapted to the animals in question, for example for adult cows 1.5 m above the floor F.

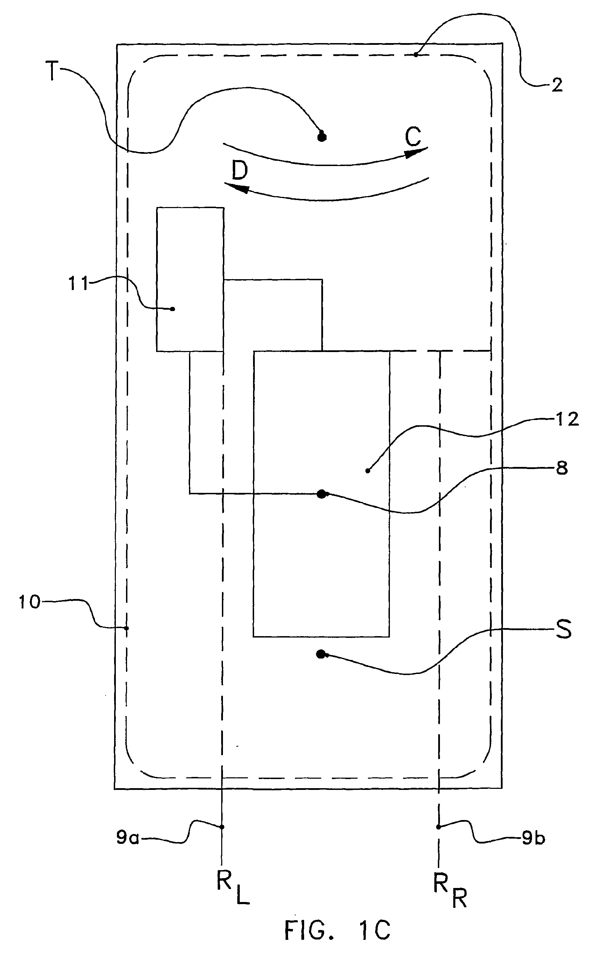

On the side facing the wall W, the case is provided with a sensor 8. The sensor 8 can observe markings 9a, 9b, which are attached to the mounting plate 10, and form lines of direction Rl and Rr (see Figure 1C for the position). The sensor 8 is connected to a control unit 11 from which the drive motor 12 is activated. Other detection means for moving the case 2 are also possible, such as an inclinodetector or inclinometer.

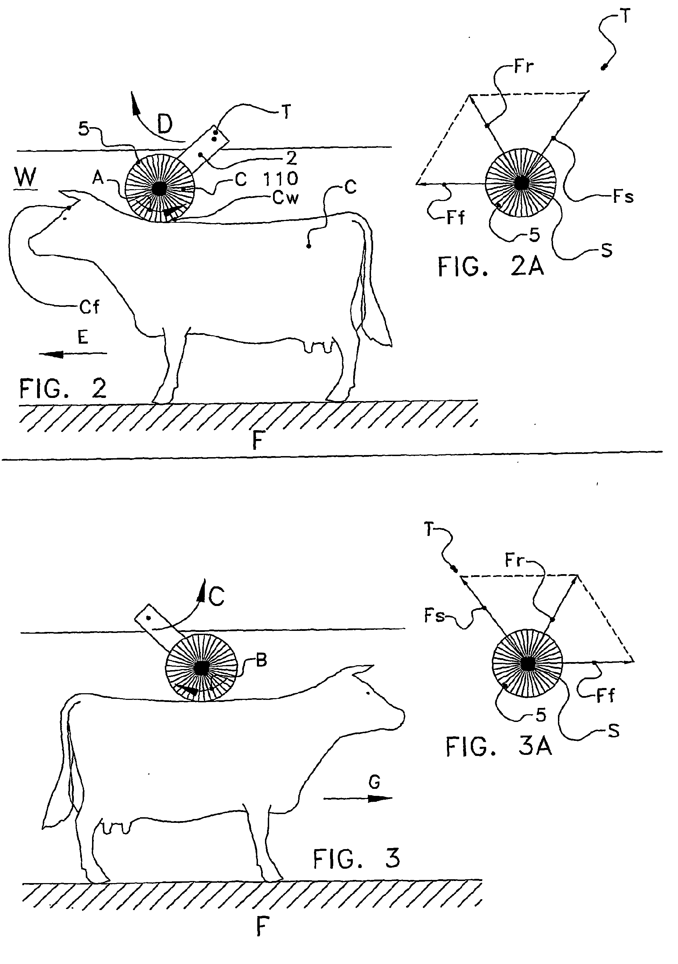

In the state represented in Figures 1A-C the brushing device is in the rest position, wherein the axes S and T lie in one vertical plane and the brush is not driven. When, as illustrated in Figure 2A, a cow C moves from right to left (this takes place at a fairly low speed), it will first with its head Cf make contact with the brush 5 and push said brush along in the direction E. As a result, the brush 5 swivels about axis T, in direction D (this is referred to as "translation"). As soon as the sensor 8 observes the markings 9a, the control unit 11 activates the motor 12, in such a way that the direction of rotation is A, as a result of which the brush 5 turns in the opposite direction.

In the force diagram of Figure 2B (the weight force as a consequence of gravity is in this case omitted), Ff is the frictional force between the brush and cow as a consequence of the rotating, Fs the force on the shaft 4 and Fr the resultant of these forces. As may be seen, this is directed also in the direction of movement and upwards.

When, as illustrated in Figure 3A, a cow C moves from left to right (this also takes place at a fairly low speed), it will first with its head Cf make contact with the brush 5 and push said brush along in the direction G. As a result, the brush 5 swivels about axis T, in direction C. As soon as the sensor 8 observes the markings 9b, the control unit 11 activates the motor 12, in such a way that the direction of rotation is B, as a result of which the brush 5 in that case too turns in the opposite direction.

In the force diagram of Figure 3B (the weight force as a consequence of gravity is in this case too omitted), Ff is the frictional force between the brush and cow as a consequence of the rotating, Fs the force on the shaft 4 and Fr the resultant. As may be seen, this is again directed also in the direction of movement and upwards.

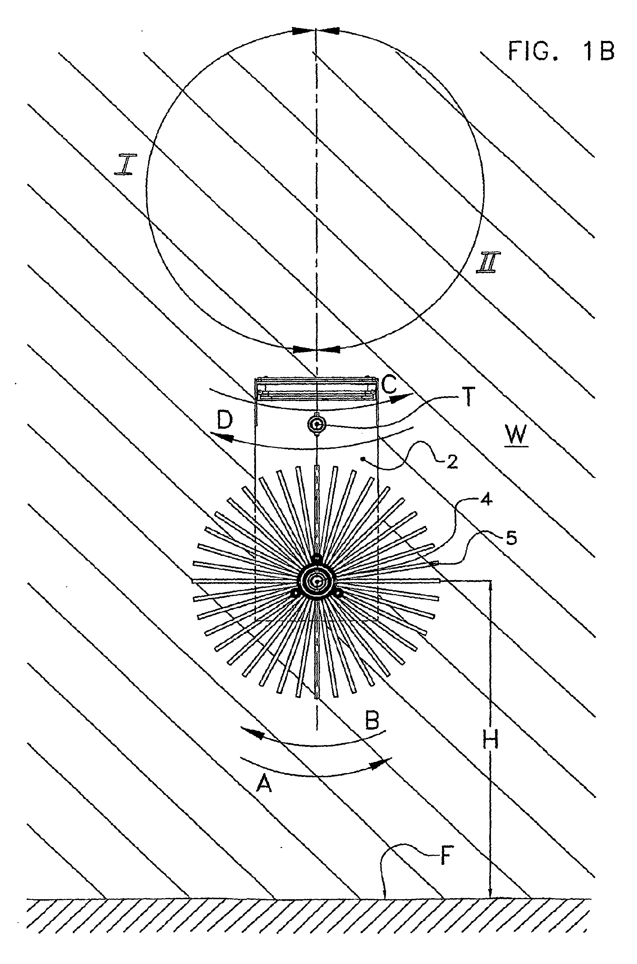

Said situations, with the aforementioned directions of rotation A and B respectively, are maintained when the cow continues to stand in said position, or moves further and the brush 5 treats the shoulder Cw and the back. The brush 5 can optionally swivel further upwards (sections I and II, Figure 1 B), till shortly before the axis has reached directly above the axis T. When the brush 5 has reached the rear end of the cow C, the brush 5 can fall back to the rest position of Figures 1A-C. The rest position can be observed by a presence sensor (not shown) for the rest position, wherein the control unit 11 can be provided with a timer in order to switch off the motor 12 after a specific time. Thus, the direction of rotation of the brush can continue to be maintained for a while, for the case in which the cow has just stepped back a little and the arm 2 has moved into a vertical position, and the cow afterwards advances again. For the case in which said temporary stepping-back movement entails further swivelling of the arm 2, toward the opposite side, and the other of the sensors 9a, 9b issues a signal to the control unit, a timer in the control unit 11 can ensure that that signal does not lead immediately to the opposite direction of rotation programmed for said position, but that that takes place only after a delay. This provision can also be used for the above-described initial movements from the rest position.

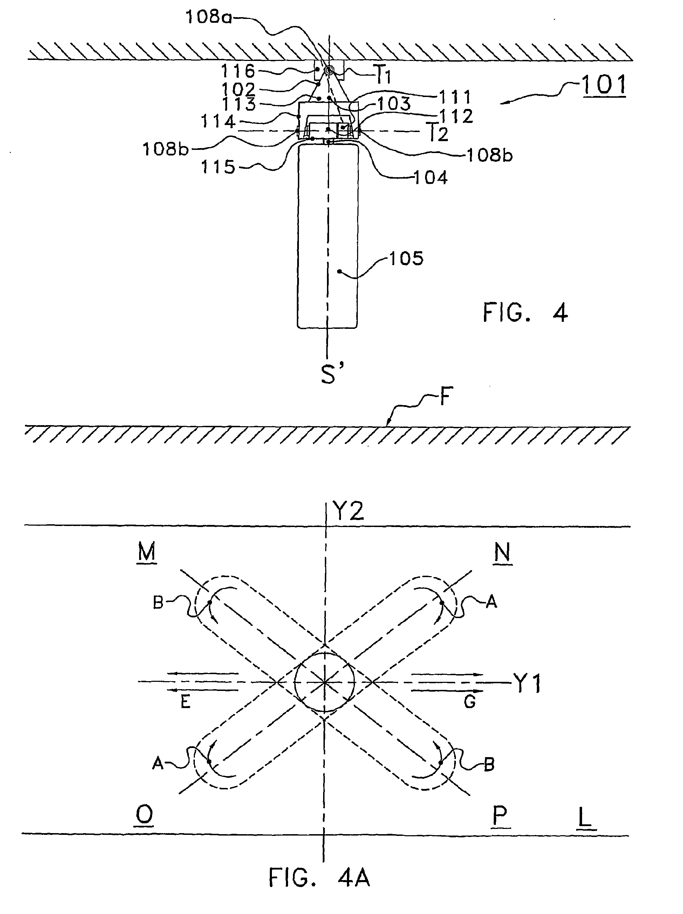

The brushing device 101 illustrated in Figure 4 comprises an elongate brush 105 which is suspended from a holder 102. The holder 102 comprises a yoke 114 and a carrier 115. Fastened to the carrier 115 is a reversible motor 112 which drives the shaft 104 of the brush 105. The carrier 115 is turnably fastened to the yoke 114, and can turn about a horizontal turn axis T2. A control unit 111 is also located on the carrier 115. The yoke 114 is itself fastened, so as to be able to turn via two upright plates 113 (about horizontal turn axis T1 which stands perpendicular to T2), to a support 116 of the holder 102, which support is fastened to a ceiling or fixed frame R. Thus, the brush 105, and the turn axis S' thereof, can swivel out of the vertical rest position, into all horizontal directions.

In Figure 4A the brushing device 101 is arranged in a gangway L. The cows can walk in the direction E or the direction G. In the rest position the brush 105 hangs vertically. Swivelling-out can take place in notional vertical planes Y1 and Y2, usually in combinations thereof. By means of rotation meters 108a, 108b which are operative in each turn axis T1 and T2 (other detection means such as inclination detectors or presence detectors are also possible), the control unit 111 can observe to which quadrant M, N, O, P the brush 105 has been swivelled by a cow.

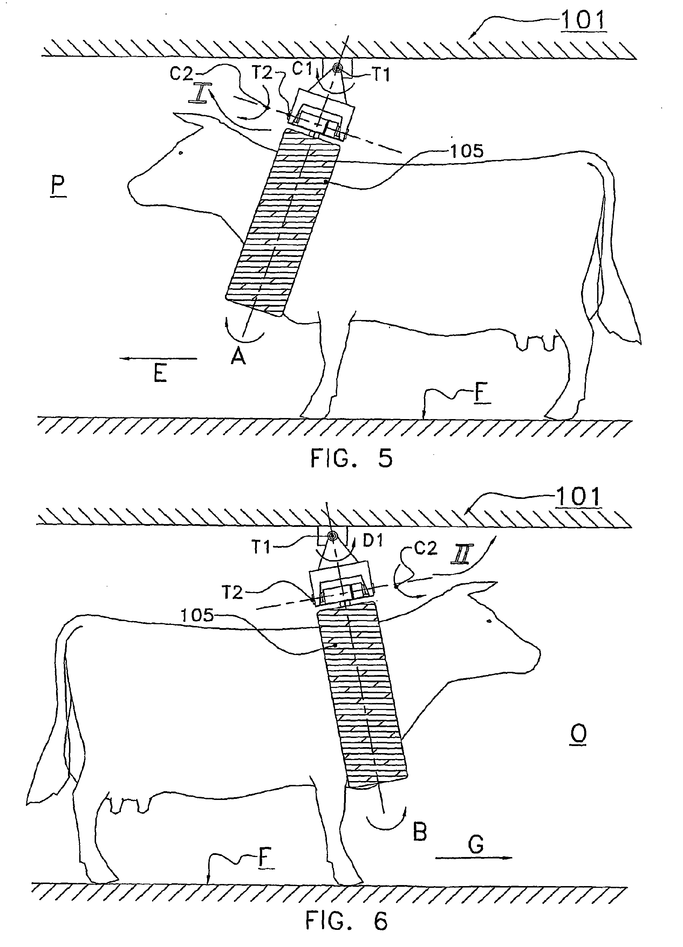

If that quadrant is O, and the brush rests against the left side of the cow which is moving in direction E, the control unit activates the motor 112 in the direction A. By way of comparison with Figure 2A, this situation is represented in Figure 5 in which the brush 105 is turned both about T1, in direction C1, and about T2, in direction C2.

If that quadrant is P, and the brush rests against the right side of the cow which is moving in direction G, the control unit activates the motor 112 in the direction B. By way of comparison with Figure 3A, this situation is represented in Figure 6 in which the brush 105 is turned both about T1, but now in direction D1, and about T2, also in direction C2.

The foregoing description is intended to illustrate the functioning of preferred embodiments of the invention, and not to limit the scope of the invention. Starting from the foregoing discussion, many variants, which come under the scope of the present invention as defined in the appended claims, will be obvious to a person skilled in the art.

## Claims

1. Device (1; 101) for brushing the sides and/or the back of livestock, in particular hoofed animals, such as cattle, comprising a brush (5; 105) and a drive (12; 112) for the brush, wherein the drive is configured for rotation of the brush about a brush axis in two opposite directions of rotation, wherein the brush is also movable from a rest position by the exertion thereon of forces generated by an animal from the livestock, **characterised in that** the device is provided with means (8, 9a, 9b, 10; 108a, 108b, 110) for observing the direction of a movement of the brush from the rest position and with means (11, 111) for activating the drive in one direction of rotation or the opposite direction of rotation as a function of the observed direction of movement.

2. Device according to Claim 1, wherein the observation means (8, 9a, 9b, 10) are configured for observing the direction of a translation of the axis of rotation of the brush with respect to the rest position.

3. Device according to Claim 1 or 2, wherein the observation means (8, 9a, 9b, 10; 108a, 108b, 110) are configured for observing the direction of a pivoting of the axis of rotation of the brush with respect to the rest position.

4. Device according to Claim 3, wherein the observation means (8, 9a, 9b, 10) are configured for observing the direction of a pivoting of the axis of rotation of the brush in a plane perpendicular to the axis of rotation.

5. Device according to Claim 4, wherein the brush is mounted on an arm (2) which can itself swivel in two opposite directions about a turn axis (T) which is substantially parallel to the axis of rotation (S).

6. Device according to Claim 5, wherein the brush (5) is located in the rest position below the turn axis (T) of the arm (2).

7. Device according to Claim 6, wherein the brush is located in the rest position just below the turn axis (T) of the arm (2).

8. Device according to one of the preceding claims, wherein in the rest position the axis of rotation of the brush has a horizontal direction component.

9. Device according to Claim 8, wherein in the rest position the axis of rotation (S) of the brush extends substantially horizontally.

10. Device according to Claim 8 or 9, wherein the control means (11) are configured for activating the drive (12) to rotate the brush in a direction of rotation which, at the location of the contact with the animal, is opposed to the observed direction of movement.

11. Device according to Claim 3, wherein the observation means (108a, 108b) are configured for observing the direction of a pivoting of the axis of rotation (S') of the brush (105) in one or more planes (Y1, Y2) which contain the axis of rotation.

12. Device according to Claim 11, wherein in the rest position the axis of rotation (S') of the brush (105) has a vertical direction component.

13. Device according to Claim 12, wherein in the rest position the axis of rotation of the brush (105) extends substantially vertically.

14. Device according to Claim 11, 12 or 13, wherein the brush is suspended at an upper end from a holder (102).

15. Device according to Claim 14, wherein the holder (102) is configured to allow a swivelling movement of the brush (105) in two vertical planes standing perpendicular to each other and combinations thereof.

16. Device according to one of the preceding claims, wherein the brush (5; 105) is elongate.

17. Device according to one of the preceding claims, wherein the brush (5; 105) is provided with brush hairs which, in the absence of rotation, stand substantially transversely to the axis of rotation.

18. Shed provided with one or more devices according to one of the preceding claims.

19. Method of brushing, using a brush (5; 105) which is driven in rotation about an axis of rotation, the sides and/or the back of livestock, in particular hoofed animals, such as cattle, wherein a direction of a movement, caused by an animal from the livestock, of the brush is observed and, on the basis of said observed direction, the brush is driven in one direction or the opposite other direction.

20. Method according to Claim 19, wherein the brush is driven in such a way that the brush turns, at the location of the region of contact with the animal, in the opposite direction with respect to the observed direction.

21. Method according to Claim 20, wherein the brush can turn via an arm (2) in two opposite directions about a turn axis (T) positioned at a distance from the axis of rotation (S), wherein during the movement, brought about by the animal, of the brush, the direction of turning about the turn axis (T) is observed for adjusting the direction of rotation of the brush.

22. Method according to Claim 19, 20 or 21, wherein the axis of rotation (S) of the brush is held substantially horizontally.

23. Method according to Claim 19, 20 or 21, wherein the axis of rotation (S) of the brush is in a rest position held substantially vertically.

## Patentansprüche

1. Vorrichtung (1; 101) zum Bürsten der Flanken und/oder des Rückens von Nutztieren, insbesondere von Huftieren wie Rinder, umfassend eine Bürste (5; 105) und einen Antrieb (12; 112) für die Bürste, wobei der Antrieb zur Drehung der Bürste um eine Bürstenachse in zwei entgegengesetzte Rotationsrichtungen ausgebildet ist, wobei die Bürste auch von einer Ruheposition durch Krafteinwirkung aus dieser durch Kräfte bewegbar ist, welche von einem solchen Nutztier erzeugt werden,
**dadurch gekennzeichnet, dass** die Vorrichtung mit Mitteln (8, 9a, 9b, 10; 108a, 108b, 110) zum Erfassen der Richtung einer Bewegung der Bürste aus der Ruheposition heraus und mit Mitteln (11, 111) zum Aktivieren des Antriebs in eine Rotationsrichtung oder in die entgegengesetzte Rotationsrichtung als eine Funktion der beobachteten Bewegungsrichtung ausgestattet ist.

2. Vorrichtung nach Anspruch 1,
wobei die Erfassungsmittel (8, 9a, 9b, 10) ausgebildet sind, um die Richtung einer Verschiebung der Rotationsachse der Bürste in Bezug auf die Ruheposition zu erfassen.

3. Vorrichtung nach Anspruch 1 oder 2,
wobei die Erfassungsmittel (8, 9a, 9b, 10; 108a, 108b, 110) ausgebildet sind, um die Richtung eines Verschwenkens der Rotationsachse der Bürste in Bezug auf die Ruheposition zu erfassen.

4. Vorrichtung nach Anspruch 3,
wobei die Erfassungsmittel (8, 9a, 9b, 10) ausgebildet sind, um die Richtung eines Verschwenkens der Rotationsachse der Bürste in einer Ebene rechtwinklig zur Rotationsachse zu erfassen.

5. Vorrichtung nach Anspruch 4,
wobei die Bürste auf einem Arm (2) angebracht ist, welcher selbst in zwei entgegengesetzte Richtungen um eine Drehachse (T), die im Wesentlichen parallel zur Rotationsachse (S) liegt, schwenkbar ist.

6. Vorrichtung nach Anspruch 5,
wobei die Bürste (5) in der Ruheposition genau unter der Drehachse (T) des Arms (2) angeordnet ist.

7. Vorrichtung nach Anspruch 6,
wobei die Bürste in der Ruheposition genau unter der Drehachse (T) des Arms (2) angeordnet ist.

8. Vorrichtung nach einem der vorhergehenden Ansprüche,
wobei in der Ruheposition die Rotationsachse der Bürste eine horizontale Richtungskomponente aufweist.

9. Vorrichtung nach Anspruch 8,
wobei in der Ruheposition die Rotationsachse (S) der Bürste sich im Wesentlichen horizontal erstreckt.

10. Vorrichtung nach Anspruch 8 oder 9,
wobei die Steuermittel (11) zum Aktivieren des Antriebs (12) ausgebildet sind, um die Bürste in einer Rotationsrichtung zu drehen, welche an der Stelle des Kontakts mit dem Tier entgegengesetzt der erfassten Bewegungsrichtung ist.

11. Vorrichtung nach Anspruch 3,
wobei die Erfassungsmittel (108a, 108b) ausgebildet sind, um die Richtung eines Verschwenkens der Rotationsachse (S') der Bürste (105) in einer oder in mehreren Ebenen (Y1, Y2), in denen die Rotationsachse liegt, zu erfassen.

12. Vorrichtung nach Anspruch 11,
wobei in der Ruheposition die Rotationsachse (S') der Bürste (105) eine vertikale Richtungskomponente aufweist.

13. Vorrichtung nach Anspruch 12,
wobei in der Ruheposition die Rotationsachse der Bürste (105) sich im Wesentlichen vertikal erstreckt.

14. Vorrichtung nach Anspruch 11, 12 oder 13,
wobei die Bürste mit einem oberen Ende an einem Halter (102) aufgehängt ist.

15. Vorrichtung nach Anspruch 14,
wobei der Halter (102) ausgebildet ist, um eine Schwenkbewegung der Bürste (105) in zwei vertikalen Ebenen, welche senkrecht zueinander stehen, und in Kombinationen davon zu erlauben.

16. Vorrichtung nach einem der vorhergehenden Ansprüche,
wobei die Bürste (5; 105) länglich ist.

17. Vorrichtung nach einem der vorhergehenden Ansprüche,
wobei die Bürste (5; 105) mit Bürstenborsten ausgestattet ist, welche bei nicht vorhandener Rotation im Wesentlichen quer zur Rotationsachse stehen.

18. Stall, ausgestattet mit einer oder mehreren Vorrichtungen nach einem der vorhergehenden Ansprüche.

19. Verfahren zum Bürsten der Flanken und/oder der Rücken von Nutztieren, insbesondere von Huftieren wie Rinder, unter Verwendung einer Bürste (5; 105), welche zur Rotation um eine Rotationsachse angetrieben ist, wobei eine Richtung einer Bewegung der Bürste, welche durch eines der Nutztiere verursacht wird, erfasst wird und auf der Grundlage der erfassten Richtung die Bürste in eine Richtung oder in die entgegengesetzte andere Richtung angetrieben wird.

20. Verfahren nach Anspruch 19,
wobei die Bürste auf solch eine Weise angetrieben ist, dass die Bürste sich an der Stelle des Kontaktbereichs mit dem Tier in die entgegengesetzte Richtung in Bezug auf die erfasste Richtung dreht.

21. Verfahren nach Anspruch 20,
wobei die Bürste sich mittels eines Arms (2) in zwei entgegengesetzte Richtungen um eine Drehachse (T) drehen kann, welche in einem Abstand von der Rotationsachse (S) positioniert ist, wobei während der Bewegung der Bürste, welche durch das Tier verursacht ist, die Drehrichtung um die Drehachse (T) zum Anpassen der Rotationsrichtung der Bürste erfasst wird.

22. Verfahren nach Anspruch 19, 20 oder 21,
wobei die Rotationsachse (S) der Bürste im Wesentlichen horizontal gehalten wird.

23. Verfahren nach Anspruch 19, 20 oder 21,
wobei die Rotationsachse (S) der Bürste in einer Ruheposition im Wesentlichen vertikal ist.

## Revendications

1. Dispositif (1 ; 101) pour brosser les flancs et/ou le dos de bétail, en particulier d'animaux ongulés, tels que des bovins, comprenant une brosse (5 ; 105) et un entraînement (12 ; 112) pour la brosse, dans lequel l'entraînement est configuré pour la rotation de la brosse autour d'un axe de brosse dans deux directions opposées de rotation, dans lequel la brosse est également mobile à partir d'une position de repos par l'application sur celle-ci de forces générées par un animal du bétail, **caractérisé en ce que** le dispositif est pourvu de moyens (8, 9a, 9b, 10 ; 108a, 108b, 110) pour observer la direction d'un mouvement de la brosse à partir de la position de repos et de moyens (11, 111) pour activer l'entraînement dans une direction de rotation ou la direction opposée de rotation en fonction de la direction observée de mouvement.

2. Dispositif selon la revendication 1, dans lequel les moyens d'observation (8, 9a, 9b, 10) sont configurés pour observer la direction d'une translation de l'axe de rotation de la brosse par rapport à la position de repos.

3. Dispositif selon la revendication 1 ou 2, dans lequel les moyens d'observation (8, 9a, 9b, 10 ; 108a, 108b, 110) sont configurés pour observer la direction d'un pivotement de l'axe de rotation de la brosse par rapport à la position de repos.

4. Dispositif selon la revendication 3, dans lequel les moyens d'observation (8, 9a, 9b, 10) sont configurés pour observer la direction d'un pivotement de l'axe de rotation de la brosse dans un plan perpendiculaire à l'axe de rotation.

5. Dispositif selon la revendication 4, dans lequel la brosse est montée sur un bras (2) qui peut lui-même pivoter dans deux directions opposées autour d'un axe de rotation (T) qui est sensiblement parallèle à l'axe de rotation (S).

6. Dispositif selon la revendication 5, dans lequel la brosse (5) est positionnée dans la position de repos en dessous de l'axe de rotation (T) du bras (2).

7. Dispositif selon la revendication 6, dans lequel la brosse est placée dans la position de repos juste en dessous de l'axe de rotation (T) du bras (2).

8. Dispositif selon une des revendications précédentes, dans lequel, dans la position de repos, l'axe de rotation de la brosse possède une composante de direction horizontale.

9. Dispositif selon la revendication 8, dans lequel, dans la position de repos, l'axe de rotation (S) de la brosse s'étend de façon sensiblement horizontale.

10. Dispositif selon la revendication 8 ou 9, dans lequel les moyens de commande (11) sont configurés pour activer l'entraînement (12) afin de faire tourner la brosse dans une direction de rotation qui, à l'emplacement du contact avec l'animal, est opposée à la direction observée de mouvement.

11. Dispositif selon la revendication 3, dans lequel les moyens d'observation (108a, 108b) sont configurés pour observer la direction d'un pivotement de l'axe de rotation (S') de la brosse (105) dans un ou plusieurs plans (Y1, Y2) qui contiennent l'axe de rotation.

12. Dispositif selon la revendication 11, dans lequel, dans la position de repos, l'axe de rotation (S') de la brosse (105) possède une composante de direction verticale.

13. Dispositif selon la revendication 12, dans lequel, dans la position de repos, l'axe de rotation de la brosse (105) s'étend de façon sensiblement verticale.

14. Dispositif selon la revendication 11, 12 ou 13, dans lequel la brosse est suspendue à une extrémité supérieure à partir d'un dispositif de retenue (102).

15. Dispositif selon la revendication 14, dans lequel le dispositif de retenue (102) est configuré pour permettre un mouvement de pivotement de la brosse (105) dans deux plans verticaux perpendiculaires l'un à l'autre et des combinaisons de ceux-ci.

16. Dispositif selon une des revendications précédentes, dans lequel la brosse (5 ; 105) est allongée.

17. Dispositif selon une des revendications précédentes, dans lequel la brosse (5 ; 105) est pourvue de poils de brosse qui, en l'absence de rotation, sont sensiblement transversaux à l'axe de rotation.

18. Hangar pourvu d'un ou de plusieurs dispositifs selon une des revendications précédentes.

19. Procédé pour brosser, en utilisant une brosse (5 ; 105) qui est entraînée en rotation autour d'un axe de rotation, les flancs et/ou le dos de bétail, en particulier d'animaux ongulés, tels que des bovins, dans lequel une direction d'un mouvement, entraîné par un animal du bétail, de la brosse est observée et, en fonction de ladite direction observée, la brosse est entraînée dans une direction ou l'autre direction opposée.

20. Procédé selon la revendication 19, dans lequel la brosse est entraînée de manière telle que la brosse tourne, à l'emplacement de la région de contact avec l'animal, dans la direction opposée par rapport à la direction observée.

21. Procédé selon la revendication 20, dans lequel la brosse peut tourner par l'intermédiaire d'un bras (2) dans deux directions opposées autour d'un axe de rotation (T) positionné à une distance de l'axe de rotation (5), dans lequel, au cours du mouvement, entraîné par l'animal, de la brosse, la direction de rotation autour de l'axe de rotation (T) est observée pour régler la direction de rotation de la brosse.

22. Procédé selon la revendication 19, 20 ou 21, dans lequel l'axe de rotation (S) de la brosse est maintenu de façon sensiblement horizontale.

23. Procédé selon la revendication 19, 20 ou 21, dans lequel l'axe de rotation (S) de la brosse est dans une position de repos maintenue de façon sensiblement verticale.
